# EUROPEAN PATENT SPECIFICATION

(11) **EP 0 468 575 B1**
(45) Date of publication and mention of the grant of the patent: **27.12.1995**
(21) Application number: 91201854.6
(22) Date of filing: 15.07.1991
(51) Int. Cl.: B29C 44/00, F25D 23/02

(54) **Method for forming closure elements for refrigeration appliances such as upright refrigerators or the like, and closure elements obtained thereby**
Herstellungsverfahren für Verschlusselemente von Kühlgeräten, wie Kühlschränke oder dergleichen und danach hergestellte Verschlusselemente
Procédé de fabrication d'éléments de fermeture pour des appareils frigorifiques tels que des réfrigérateurs verticaux ou analogues, et éléments de fermeture ainsi obtenus

(30) Priority: 24.07.1990 IT 2102990
(43) Date of publication of application: 29.01.1992
(73) Proprietor: WHIRLPOOL EUROPE B.V., 5507 SK Veldhoven (NL)
(72) Inventor: Ferri, Umberto, NL-5656 AA Eindhoven (NL)
(74) Representative: Guerci, Alessandro

(56) References cited:
- EP-A- 0 161 416
- EP-A- 0 162 344
- US-A- 2 449 384
- US-A- 3 608 262
- US-A- 3 940 195
- US-A- 4 400 336

## Description

This invention relates to a method for forming closure elements for refrigeration appliances such as upright refrigerators or the like, said closure element comprising a door and a door backing panel associated therewith, said door and door backing panel having their own structures.

The door backing panel having a surface arranged to face the usual refrigerator cabinet and from which there extend two lateral ribs and at least one further intermediate rib positioned between said lateral ribs, said method comprising a first injection of insulating material into the door backing panel structure, then fitting the door structure to the door backing panel and a further injection of insulating material into the closure element thus formed.

A method for forming closure elements as described herebefore is generally known in the art. A disadvantage of this known method resides in the fact that after the further injection of insulating material in the closure element there is frequently a natural shrinkage of said material or polyurethane at said intermediate rib and within it. This is particularly because of the greater thickness of material injected into said rib and hence the greater material shrinkage force in the part corresponding to the door. A pulling effect towards the interior is therefore created on the corresponding front outer side of the door.

Consequently one or more cavities or depressions are created on the front side of the door which correspond to the intermediate rib of the door backing panel.

Thus in known closure elements surface defects can appear on the front of said elements, resulting in an obvious problem of elegance.

There is also a consequent weakening of the closure elements in those parts in which the polyurethane shrinks.

An object of the present invention is therefore to provide a method for forming closure elements for refrigeration appliances, particularly large-dimension upright refrigerators, which does not result in the creation of any cavity or depression in a side or surface which is to lie at the front of the refrigerator.

A further object is to provide a method of the stated type which is simple to implement, reliable and of low cost.

A further object of the invention is to provide a closure element particularly for refrigerators of the stated type which has no internal weakness, i.e. is of good mechanical characteristics, and has no depression visible on that side which is to lie at the front of said refrigerator.

These and further objects which will be apparent to the expert of the art are attained by a method for forming closure elements for refrigeration appliances such as upright refrigerators or the like as described in the first paragraph of this description and wherein before injecting the insulating material into the door backing panel structure an essentially flat body or insert is arranged in this structure, said insert at least covering within said structure a cavity corresponding to the intermediate rib.

The said method provides a closure element for a refrigeration appliance such as an upright refrigerator or the like, said closure element comprising a door and a door backing panel having their own structures, the door backing panel having a flat surface from which there extend two lateral ribs and a further rib positioned between said lateral ribs. Said closure element according to the invention comprising between the door and door backing panel at least one substantially flat insert having a length approximately equal to the length of the door backing panel, at least a flat part of said insert covering in the door backing panel structure a cavity corresponding to the intermediate rib.

The present invention will be more apparent from the accompanying drawing which is provided by way of non-limiting example and in which:
Figure 1 is a schematic side view of an upright refrigerator constructed in accordance with the invention;
Figure 2 is a partial perspective sectional view on the line II-II of Figure 1; and
Figure 3 is an exploded perspective view of the closure element of the refrigerator of Figure 1.

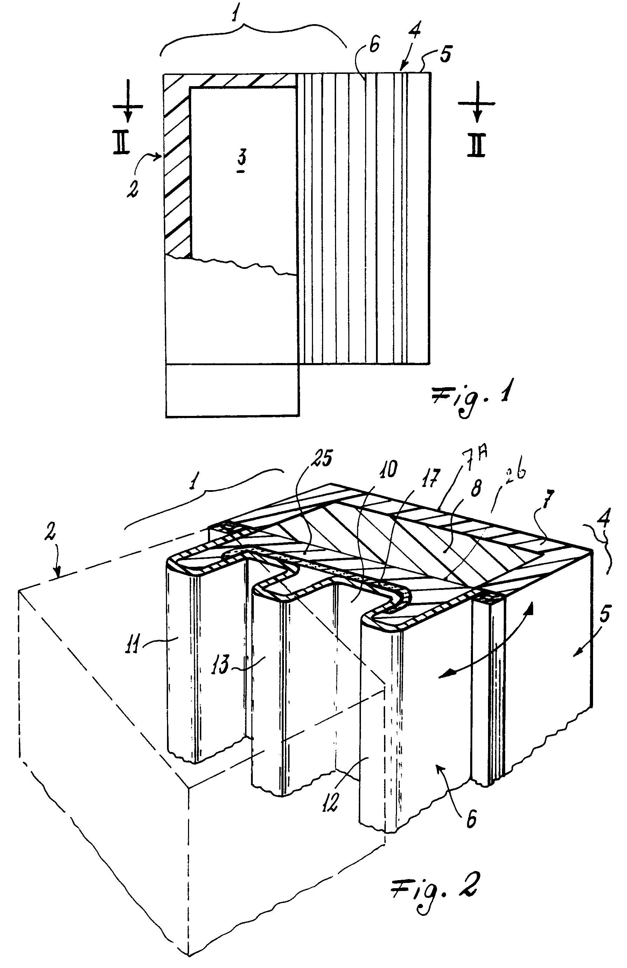

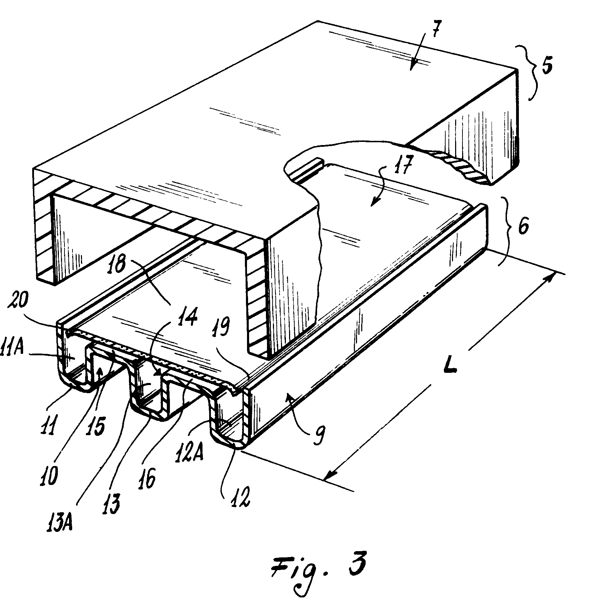

With reference to said figures, an upright refrigerator is indicated overall by 1 and comprises a cabinet 2 containing at least one refrigeration compartment 3 and on which at least one closure element 4 is provided.

The element 4 comprises a door 5 with which a door backing panel 6 is associated.
The door 5 has a structure 7.

The door backing panel 6 has a structure 9 comprising a face or surface 10 to lie at the front of the compartment 3. From the surface there project two laterally positioned ribs 11 and 12 and an intermediate rib 13 positioned between said ribs 11 and 12.
Corresponding with said ribs 11, 12 and 13, cavities 11A, 12A, 13A are present in an inner portion 14 of the structure 9 and are separated from each other by flat portions 15 and 16.

On said flat portions or parts 15 and 16 there is positioned a substantially flat body or insert having at least one dimension equal to the dimensions of the door backing panel 6, said dimension being the length L of said door backing panel.
More specifically, the insert 17 is arranged to cover the cavity 13A corresponding to the intermediate rib 13, and for this reason must have a length equal to the length L of the door backing panel 6 (and thus of said rib). For this purpose, said insert comprises a portion 18 to be positioned over said cavity 13A, and lateral ends 19 and 20 to be positioned at the cavities 11A and 12A of the door backing panel structure 9.
In particular, the lateral ends 19 and 20 are arranged to at least partly fall into said cavities 11A and 12A so as to enable said insulating material 25 to penetrate into said cavities.
On this basis, a description will now be given of the method for forming the closure element 4.

Having formed in known manner the structures 7 and 9 of the door 5 and door backing panel 6 respectively, the insert 17 is arranged on the inner portion 14 of the structure 9.
Specifically, the insert 17 rests with its portion 18 on the flat parts 15 and 16 of said structure and covers the cavity 13A. At the same time, by the action of their own weight, the ends 19 and 20 of the insert 17 bend over into the cavities 11A and 12A. Having done this a first injection of insulating material or polyurethane 25 into the structure 9 of the door backing panel is effected. This polyurethane falls onto the portion 18 of the insert 17 to civer it, then penetrates into the cavities 11A and 12A but does not penetrate (or only a small quantity penetrates) into the cavity 13A corresponding to the intermediate rib 13. After this operation, the structure 7 of the door 5 is mounted on the door backing panel 6 and a second injection of polyurethane 8 is effected into this structure.

Because of the presence of the insert 17, with the second polyurethane injection there is no "drawing" of said polyurethane 8 towards the cavity 13A and there is therefore no pulling of the outer flat part 7A of the structure 7 of the part 5, said part or front 7A representing the external part of the door when the element 4 is fixed to the front of the cabinet 2. In this manner no depressions are created in the front 7A, such depressions being visible and damaging the appearance of the finished refrigerator 1.

In addition the presence of the insert 17 means that after the first polyurethane injection a substantially flat surface 26 is formed on the structure 9 of the door backing panel 6, said surface 26 acting as a support for the structure 7 of the door 5. This means that the door and door backing panel can be more rapidly fitted together and enables these elements to be joined together in a more reliable and simple manner.

## Claims

1. A method for forming closure elements for refrigeration appliances such as upright refrigerators or the like, said closure element comprising a door (5) and a door backing panel (6) associated therewith, said door and door backing panel having their own structures (7, 9), the door backing panel (6) having a surface (10) arranged to face the usual refrigerator cabinet and from which there extend two lateral ribs (11,12) and at least one further intermediate rib (13) positioned between said lateral ribs, said method comprising a first injection of insulating material (25) into the door backing panel structure (9), then fitting the door structure (7) to the door backing panel (6), and a further injection of insulating material (8) into the closure element thus formed, wherein before injecting the insulating material (25) into the structure (9) of the door backing panel (6) a substantially flat body or insert (17) is arranged in said structure (9), said insert at least covering within said structure (9) a cavity (13A) corresponding to the intermediate rib (13).

2. A method as claimed in claim 1, characterised in that the insert (17) is arranged within the structure (9) of the door backing panel (6) on flat portions (15,16) of this latter, the lateral ends (19, 20) of said insert (17) at least partly penetrating into those cavities (11A, 12A) of said structure (9) which correspond to the lateral ribs (11, 12).

3. A method as claimed in claim 1, characterised in that during the first injection of insulating material (25) this does not penetrate into the cavity (13A) corresponding to the intermediate rib (13).

4. A method as claimed in claim 1, characterised in that the first injection of insulating material (25) is effected by causing this to fall onto a substantially flat portion (18) of the insert (17), said material (25) covering the insert to lie in correspondence with the lateral ribs.

5. A closure element for a refrigeration appliance such as an upright refrigerator or the like, said closure element comprising a door (5) and a door backing panel (6) having their own structures (7, 9), the door backing panel (6) having a flat surface from which there extend two lateral ribs (11, 12) and a further intermediate rib (13) positioned between said lateral ribs, wherein said closure element comprises between the door (5) and door backing panel (6) at least one substantially flat insert (17) having a length approximately equal to the length (L) of the door backing panel (6), at least a flat portion (18) of said insert covering in the structure (9) of the door backing panel (6) a cavity (13A) corresponding to the intermediate rib.

6. An element as claimed in claim 5, characterised in that a flat portion (18) of the insert (17) rests on flat parts (15, 16) lying between cavities (11A, 12A, 13A) provided in the structure (9) of the door backing panel (6) and corresponding to the ribs (11, 12,13) of said door backing panel.

7. An element as claimed in claim 5, characterised in that the insulating material (25) is deposited on the flat portion (18), the structure (7) of the door (5) then being rested on said insulating material.

## Patentansprüche

1. Verfahren zur Fertigung von Schließelementen für Kühlgeräte, wie beispielsweise Stand-Kühlschränke oder dgl., wobei das Schließelement eine Tür (5) und eine mit der Tür verbundene Hintertürfütterung (6) aufweist, die Tür und die Hintertürfütterung eigene Körper (7, 9) haben und die Hintertürfütterung (6) eine dem üblichen Kühlschrankgehäuse (2) zugewandte Fläche (10) hat, aus der zwei Seitenrippen (11, 12) und mindestens eine weitere, zwischen den Seitenrippen angeordnete Mittelrippe herausragen, wobei dieses Verfahren folgende Schritte umfaßt
- zunächst wird bei einer ersten Einspritzung Isoliermaterial (25) in den Körper (9) der Hintertürfüllung gespritzt,
- dann wird das Türgehäuse (7) auf die Hintertürfüllung (6) aufgesetzt,
- schließlich wird bei einer zweiten Einspritzung Isoliermaterial (8) in das so gebildete Schließelement gespritzt,
wobei vor der ersten Einspritzung von Isoliermaterial (25) in den Körper (9) der Hintertürfüllung (6) ein im wesentlichen flacher Einsatz (17) im Körper (9) angeordnet worden ist, wobei dieser Einsatz mindestens im Körper (9) einen der Mittelrippe (13) zugeordneten Raum (13A) abdeckt.

2. Verfahren nach Anspruch 1, dadurch gekennzeichnet, daß der Einsatz (17) im Körper (9) der Hintertürfüllung (6) flache Räume (15, 16) der Hintertürfüllung begrenzt und daß Seitenteile (19, 20) des Einsatzes (17) mindestens teilweise in diejenigen Räume (11A, 12A) des Körpers (9) eindringen, die den Seitenrippen (11, 12) zugeordnet sind.

3. Verfahren nach Anspruch 1, dadurch gekennzeichnet, daß bei der ersten Einspritzung das Isoliermaterial (25) daran gehindert wird, in den der Mittelrippe (13) zugeordneten Raum (13A) einzudringen.

4. Verfahren nach Anspruch 1, dadurch gekennzeichnet, daß bei der ersten Einspritzung das Isoliermaterial (25) auf einen im wesentlichen flachen Teil (18) des Einsatzes (17) aufgebracht wird, wobei das Isoliermaterial (25) in Verbindung mit den Seitenrippen kommt.

5. Schließelement für ein Kühlgerät, wie beispielsweise ein Stand-Kühlschrank oder dgl., wobei das Schließelement eine Tür (5) und eine mit der Tür verbundene Hintertürfütterung (6) aufweist, die Tür und die Hintertürfütterung eigene Körper (7, 9) haben und die Hintertürfütterung (6) eine dem üblichen Kühlschrankgehäuse (2) zugewandte Fläche (10) hat, aus der zwei Seitenrippen (11, 12) und mindestens eine weitere, zwischen den Seitenrippen angeordnete Mittelrippe herausragen, wobei das Schließelement zwischen der Tür (5) und der Hintertürfüllung (6) mindestens einen im wesentlichen flachen Einsatz (17) aufweist, dessen Länge etwa der Länge (L) der Hintertürfüllung (6) entspricht, wobei mindestens ein flacher Teil (18) des Einsatzes im Körper (9) der Hintertürfüllung (6) einen der Mittelrippe zugeordneten Raum (13A) abdeckt.

6. Schließelement nach Anspruch 5, dadurch gekennzeichnet, daß ein flacher Teil (18) des Einsatzes (17) flache Teilräume (15, 16) begrenzt, die zwischen Räumen (11A, 12A, 13A) des Körpers (9) der Hintertürfüllung (6) liegen, welche den Rippen (11, 12, 13) der Hintertürfüllung zugeordnet sind.

7. Schließelement nach Anspruch 5, dadurch gekennzeichnet, daß das Isoliermaterial (25) auf den flachen Teil (18) aufgebracht wird und daß danach das Gehäuse (7) der Tür (5) auf dieses Isoliermaterial gelegt wird.

## Revendications

1. Procedé pour former des éléments de fermeture pour des appareils de réfrigération tels que des réfrigérateurs armoires ou analogues, ledit élément de fermeture comprenant une porte (5) et un panneau de contre-porte (6) qui y est associé, ladite porte et ledit panneau de contre-porte ayant chacun sa propre structure (7, 9), le panneau de contre-porte (6) ayant une surface (10) disposée pour faire face à l'habituel meuble de réfrigérateur et sur laquelle font saillie deux nervures latérales (11, 12) et au moins une autre nervure intermédiaire (13) positionnée entre lesdites nervures latérales, ledit procédé comprenant une première injection de matière isolante (25) dans la structure (9) du panneau de contre-porte, puis le montage de la structure de porte (7) sur le panneau de contre-porte (6) et une nouvelle injection de matière isolante (8) dans l'élément de fermeture ainsi formé, dans lequel, avant d'injecter la matière isolante (25) dans la structure (9) du panneau de contre-porte (6), on dispose un corps ou insert sensiblement plat (17) dans ladite structure (9), ledit insert ayant au moins pour effet de recouvrir, à l'intérieur de ladite structure (9), une cavité (13A) correspondant à la nervure intermédiaire (13).

2. Procédé selon la revendication 1, caractérisé en ce que l'insert (17) est disposé, à l'intérieur de la structure (9) du panneau de contre-porte (6), sur des portions plates (15, 16) de ce dernier, les extrémités latérales (19, 20) dudit insert (17) pénétrant au moins partiellement dans lesdites cavités (11A, 12A) de ladite structure (9) qui correspondent aux nervures latérales (11, 12).

3. Procédé selon la revendication 1, caractérisé en ce que, pendant la première injection de matière isolante (25), cette matière ne pénètre pas dans la cavité (13A) qui correspond à la nervure intermédiaire (13).

4. Procédé selon la revendication 1, caractérisé en ce que la première injection de matière isolante (25) est exécutée en la faisant tomber sur une portion sensiblement plate (18) de l'insert (17), ladite matière (25) recouvrant l'insert de façon à se trouver au droit des nervures latérales.

5. Elément de fermeture pour un appareil de réfrigération tel qu'un réfrigérateur armoire ou analogue, ledit élément de fermeture comprenant une porte (5) et un panneau de contre-porte (6) ayant chacun sa propre structure (7, 9), le panneau de contre-porte (6) ayant une surface plate sur laquelle font saillie deux nervures latérales (11, 12) et une autre nervure intermédiaire (13) positionnée entre lesdites nervures latérales, dans lequel ledit élément de fermeture comprend, entre la porte (5) et le panneau de contre-porte (6) au moins un insert sensiblement plat (17) ayant une longueur approximativement égale à la longueur (L) du panneau de contre-porte (6), au moins une portion plate (18) dudit insert recouvrant, dans la structure (9) du panneau de contre-porte (6), une cavité (13A) qui correspond à la nervure intermédiaire.

6. Elément selon la revendication 5, caractérisé en ce qu'une portion plate (18) de l'insert (17) repose sur des parties plates (15, 16) se trouvant entre les cavités (11A, 12A, 13A) prévues dans la structure (9) du panneau de contre-porte (6) et qui correspondent aux nervures (11, 12, 13) dudit panneau de contre-porte.

7. Elément selon la revendication 5, caractérisé en ce que la matière isolante (25) est déposée sur la partie plate (18), la structure (7) de la porte (5) étant appuyée sur ladite matière isolante.
